# EUROPEAN PATENT APPLICATION

(11) **EP 4 497 768 A1**
(43) Date of publication of application: **29.01.2025**
(21) Application number: 23187325.8
(22) Date of filing: 24.07.2023
(51) Int. Cl.: C08G 18/24, C08G 18/48, C08G 18/69, C08G 18/75, C08G 18/80, C08G 59/40, C09J 163/00

(54) **HEAT-CURING EPOXY RESIN COMPOSITION SUITABLE FOR LOW CURING TEMPERATURE WITH GOOD STORAGE STABILITY**

(71) Applicant: Sika Technology AG, 6340 Baar (CH)
(72) Inventor: KRÜGER, Christian, 8048 Zürich (CH); BÖFER, Cornelia, 8048 Zürich (CH)
(74) Representative: Sika Patent Attorneys

(57) **Abstract**

The present invention relates to thermosetting epoxy resin compositions comprising an epoxy resin, a dihydrazide curing agent and a specific terminally blocked polyurethane prepolymer as a toughening agent. The compositions feature good mechanical properties and storage stability and a low curing temperature. The epoxy resin compositions are especially suitable for use as bodywork adhesive.

## Description

### Technical field

The invention relates to the field of thermosetting one-component epoxy resin compositions, especially for use as bodywork adhesive.

### Prior art

Thermosetting epoxy resin compositions have long been known. Efforts have already been made for some time to remedy or at least significantly reduce the great disadvantage of epoxy resin compositions, namely their brittleness, the effect of which is that the cured epoxy resin composition cracks or is destroyed under impact stress. Attempts have already been made to do this by the addition of impact modifiers or by chemical modification of epoxy resins.

An important field of use of thermosetting epoxy resin compositions is in motor vehicle construction, especially in bonding in the bodywork. After the application of the epoxy resin composition, the bodywork is heated in the cathodic electrocoating oven, because of which the thermosetting epoxy resin composition is cured.

However, efforts are currently under way in the market to lower the temperature of the cathodic electrocoating ovens. Thus, there is a great need on the market for thermosetting epoxy resin compositions containing impact modifiers that cure even at relatively low temperatures, i.e. at a temperature of 130 to 140°C, even after a short time, typically 10 to 15 minutes. Further, said thermosetting epoxy resin compositions should also be sufficient storage stable especially if exposed to storage temperatures around 50 °C that can occur during shipping or storage in hot climate. There is therefore a need for toughened thermosetting one-component epoxy resin compositions which on the one hand cure at lower temperatures but on the other hand have sufficient storage stability.

### Summary of the invention

It is therefore an object of the present invention to provide storage stable toughened thermosetting one-component epoxy resin compositions that have sufficient mechanical properties, especially lap shear strength and impact peal performance, after shorter curing times at lower temperatures, especially 10 minutes at 140°C.

This object was surprisingly achieved by a thermosetting one-component epoxy resin composition as claimed in claim 1. This epoxy resin composition has particularly good usability as a one-component thermosetting adhesive, especially as a thermosetting one-component bodywork adhesive in motor vehicle construction.

### Ways of executing the invention

The present invention relates to thermosetting one-component epoxy resin compositions comprising:
a) at least one epoxy resin A having an average of more than one epoxy group per molecule;
b) at least one curing agent **B** for epoxy resins, where the curing agent **B** is a dihydrazide, preferably selected from the group consisting of aromatic dicarboxylic dihydrazide **B1** and aliphatic dicarboxylic dihydrazide **B2**; and
c) at least one toughness improver **D** that is a terminally blocked polyurethane prepolymer of the formula (I): 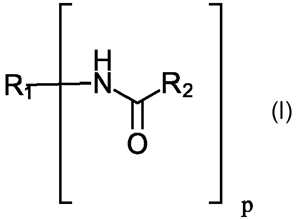
   where R₁ is a p-valent radical of a linear or branched polyurethane prepolymer terminated by isocyanate groups after the removal of the terminal isocyanate groups;
   p has a value of 2 to 8; and
   R₂ is a blocking group which is detached at a temperature above 100°C, wherein R₂ is not a substituent selected from the group consisting of cardanol after removal of the OH proton, 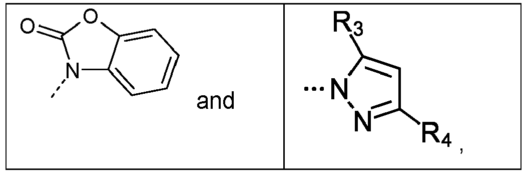 where
   R₃ and R₄ are each independently H or an alkyl group or an aryl group or an aralkyl group.

In this document, the use of the term "independently" in connection with substituents, radicals or groups should be interpreted such that the substituents, radicals or groups having the same designation in the same molecule may occur simultaneously with different meanings.

The prefix "poly" in substance names such as "polyol", "polyisocyanate", "polyether" or "polyamine" in the present document indicates that the respective substance, in a formal sense, contains more than one of the functional groups that occur in its name per molecule.

In the present document, "molecular weight" is understood to mean the molar mass (in grams per mole) of a molecule. "Average molecular weight" is understood to mean the number-average molecular weight Mₙ of an oligomeric or polymeric mixture of molecules, which is typically determined by means of GPC against polystyrene as standard.

A "primary hydroxyl group" refers to an OH group bonded to a carbon atom having two hydrogens.

In the present document, the term "primary amino group" refers to an NH₂ group bonded to one organic radical, while the term "secondary amino group" refers to an NH group bonded to two organic radicals which may also together be part of a ring. Accordingly, an amine having one primary amino group is referred to as "primary amine", one having a secondary amino group correspondingly as "secondary amine", and one having a tertiary amino group as "tertiary amine".

In the present document, "room temperature" refers to a temperature of 23°C.

The epoxy resin **A** having an average of more than one epoxy group per molecule is preferably a liquid epoxy resin or a solid epoxy resin. The term "solid epoxy resin" is very well known to a person skilled in the art of epoxies and is used in contrast to "liquid epoxy resins". The glass transition temperature of solid resins is above room temperature, meaning that they can be comminuted at room temperature to give free-flowing powders.

Preferred epoxy resins have the formula (II)

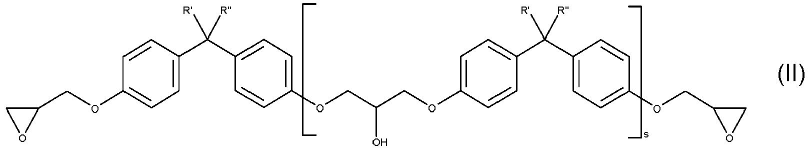

The substituents R' and R" here are independently either H or CH₃.

In solid epoxy resins, the index s has a value of > 1.5, especially of 2 to 12.

Such solid epoxy resins are commercially available, for example from Dow or Huntsman or Hexion.

Compounds of the formula (II) having an index s of 1 to 1.5 are referred to as semisolid epoxy resins by the person skilled in the art. For this present invention, they are likewise considered to be solid resins. However, preferred solid epoxy resins are epoxy resins in the narrower sense, i.e. where the index s has a value of > 1.5.

In liquid epoxy resins, the index s has a value of less than 1. Preferably, s has a value of less than 0.2.

Preference is thus given to diglycidyl ethers of bisphenol A (DGEBA), of bisphenol F, and of bisphenol A/F. Such liquid resins are available, for example, as Araldite^{®} GY 250, Araldite^{®} PY 304, Araldite^{®} GY 282 (Huntsman) or D.E.R.^{™} 331 or D.E.R.^{™} 330 (Dow) or Epikote 828 (Hexion).

Further suitable epoxy resins **A** are what are called epoxy novolaks. More particularly, these are phenol or cresol epoxy novolaks.

Such epoxy resins are commercially available under the EPN or ECN and Tactix^{®} trade names from Huntsman or from the D.E.N.^{™} product series from Dow Chemical.

The epoxy resin **A** is preferably an epoxy resin of the formula (II), especially a liquid epoxy resin of the formula (II).

In a particularly preferred embodiment, the thermosetting one-component epoxy resin composition contains both at least one liquid epoxy resin of the formula (II) with s < 1, especially less than 0.2, and at least one solid epoxy resin of the formula (II) with s > 1.5, especially from 2 to 12.

The proportion of the epoxy resin **A** is preferably 10-60% by weight, more preferably 30-60% by weight, most preferably 40-55% by weight, based on the total weight of the thermosetting one-component epoxy resin composition.

It is further advantageous when 50-100% by weight, especially 80-100% by weight of the epoxy resin **A** is an aforementioned liquid epoxy resin.

It is further advantageous when 0-30% by weight, especially 0-20% by weight, more preferably 0-15% by weight, of the epoxy resin **A** is an aforementioned solid epoxy resin.

The composition of the invention also contains at least one curing agent **B** for epoxy resins. The curing agent **B** is a dihydrazide, which is preferably selected from the group consisting of aromatic dicarboxylic dihydrazide **B1** and aliphatic dicarboxylic dihydrazide **B2**.

If the curing agent **B** is an aromatic dicarboxylic dihydrazide **B1**, it is preferably selected from the group consisting of isophthalic dihydrazide and/or terephthalic dihydrazide, more preferably isophthalic dihydrazide.

Suitable dihydrazides are commercially available, for example, from Otsuka Chemical Co., Ltd under the Ajicure^{®} trade name (from Ajinomoto Fine-TechnoCo., Inc.) and under the Technicure^{®} trade name (from A&C Catalysts).

Preferably, the curing agent **B** is an aliphatic dicarboxylic dihydrazide **B2**, preferably selected from the group consisting of glutaric dihydrazide, adipic dihydrazide, pimelic dihydrazide, 8,12-eicosadienedioic acid 1,20-dihydrazide and 4-isopropyl-2,5-dioxoimidazolidine-1,3-di(propionohydrazide).

Preference is given to adipic dihydrazide, 8,12-eicosadienedioic acid 1,20-dihydrazide (UDH) and 4-isopropyl-2,5-dioxoimidazolidine-1,3-di(propionohydrazide) (VDH). Most preferred is adipic dihydrazide.

Suitable dihydrazides are commercially available, for example, from Otsuka Chemical Co., Ltd under the Ajicure^{®} trade name (from Ajinomoto Fine-TechnoCo., Inc.) and under the Technicure^{®} trade name (from A&C Catalysts)

It can be preferable if the curing agent **B** is an aliphatic dicarboxylic dihydrazide **B2**. This is advantageous with respect to good storage stability and high values for impact peel. This can be seen, for example, in table 4 in the comparison of E9 with E10 and Ref4.

It can be further preferable if the curing agent **B** is mixture of an aromatic dicarboxylic dihydrazide **B1** and an aliphatic dicarboxylic dihydrazide **B2**.

Preferably, the weight ratio of aromatic dicarboxylic dihydrazide **B1** to aliphatic dicarboxylic dihydrazide **B2 (B1/B2)** is from 1 - 6, preferably 2 - 5, more preferably 3-4. This is advantageous with respect to high Tg-values and high values for mechanical properties. This can be seen, for example, in table 4 in the comparison of E10 with E9 and Ref4.

If the curing agent **B** is a mixture of an aromatic dicarboxylic dihydrazide **B1** and an aliphatic dicarboxylic dihydrazide **B2** it is especially preferred if the aromatic dicarboxylic dihydrazide **B1** is isophthalic dihydrazide and an aliphatic dicarboxylic dihydrazide **B2** is adipic dihydrazide and the weight ratio of aromatic dicarboxylic dihydrazide **B1** to aliphatic dicarboxylic dihydrazide **B2 (B1/B2)** is from 1 - 6, preferably 2 - 5, more preferably 3-4.

Preferably, the ratio of the proportion of the sum of the epoxy groups of the epoxy resin **A** in mol / proportion of curing agent **B** in mol **(A/B)** is 2-6, preferably 3-5, most preferably 3.5-4.5. This is advantageous in that, within this range, particularly advantageous values are obtained for mechanical properties, especially lap shear strength and impact peel of the cured composition.

It may further be advantageous when more than 80% by weight, preferably more than 90% by weight, especially more than 95% by weight, especially preferably more than 98% by weight, most preferably more than 99% by weight, based on the total weight of the thermosetting one-component epoxy resin composition, of molecules able to act as curing agents for epoxy resins at temperatures between 100-220°C, are the molecules of the curing agent **B**.

It is further advantageous when the thermosetting one-component epoxy resin composition includes a minimum amount of dicyandiamide. If the epoxy resin composition includes dicyandiamide, the weight ratio of the total amount of curing agent **B** to dicyandiamide (**B**/dicyandiamide) is ≥ 0.5, ≥ 0.75, ≥ 1, ≥ 2, ≥ 5, especially ≥ 10, preferably ≥ 50, more preferably ≥ 100.

The amount of dicyandiamide is preferably less than 5% by weight, less than 3% by weight, less than 2% by weight, especially less than 1% by weight, preferably less than 0.5% by weight, more preferably less than 0.3% by weight, most preferably less than 0.1% by weight, based on the total weight of the epoxy resin composition. More preferably, the thermosetting one-component epoxy resin composition does not include any dicyandiamide.

Preferably, the thermosetting one-component epoxy resin composition additionally contains at least one accelerator **C** for epoxy resins. This is advantageous especially with respect to curing at lower temperatures.

Preferably, the accelerator **C** for epoxy resins is selected from the list consisting of substituted ureas, imidazoles, imidazolines and blocked amines, especially substituted ureas.

This preferably comprises substituted ureas of the formula (III)

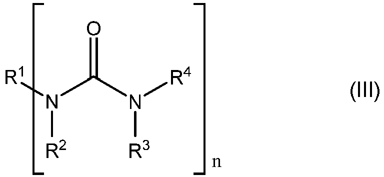

in which R¹ and R² are independently hydrogen atoms or monovalent alkyl radicals which have 1 to 10 carbon atoms and optionally also comprise oxygen atoms, nitrogen atoms and/or aromatic units or together form a divalent alkyl radical having 1 to 10 carbon atoms, and which may additionally comprise oxygen atoms, nitrogen atoms or aromatic units; R³ and R⁴ are independently hydrogen atoms or monovalent alkyl radicals which have 1 to 10 carbon atoms and optionally also comprise oxygen atoms or nitrogen atoms; and the index n has a value of 1 or 2.

The substituted urea of the formula (III) is preferably selected from the group consisting of p-chlorophenyl-N,N-dimethylurea (monuron), 3-phenyl-1,1-dimethylurea (fenuron), 3,4-dichlorophenyl-N,N-dimethylurea (diuron), N-methylurea, N,N-dimethylurea, N,N'-dimethylurea, N,N,N'-trimethylurea, N,N,N',N'-tetramethylurea and derivatives thereof, where some or all methyl groups are instead ethyl groups.

Preferably, R¹ and R² are independently hydrogen atoms or monovalent linear or branched alkyl radicals which have 1 to 10, preferably 1 to 5, more preferably 1 to 4, carbon atoms and optionally together constitute a divalent alkyl radical that forms a ring structure with the adjacent nitrogen atom, and/or R³ and R⁴ independently represent hydrogen atoms or monovalent linear or branched alkyl radicals which have 1 to 10, preferably 1 to 5, more preferably 1 to 4, carbon atoms and optionally together constitute a divalent alkyl radical that forms a ring structure with the adjacent nitrogen atom.

Very particularly preferred substituted ureas of the formula (III) are those in which R¹ and R² in formula (III) are both hydrogen atoms and/or in which R³ and R⁴ are both ethyl or methyl groups, preferably methyl groups.

Further preferred urea derivatives of the formula (III) include those in which R¹, R², R³ and R⁴ in formula (III) all represent ethyl or methyl, preferably methyl groups, or in which R¹, R² and R³ represent ethyl or methyl, preferably methyl, and R⁴ is a hydrogen atom, or where R¹ and R⁴ both represent hydrogen atoms, and R² and R³ both represent ethyl or methyl groups, preferably methyl groups.

Suitable urea derivatives are commercially available, for example, under the Dyhard ^{®} trade name (from AlzChem Group AG), under the Omicure^{®} trade name (from CVC Thermoset Specialties), under the Amicure^{®} trade name (from Evonik) and from Sigma Aldrich.

It is further preferred if the thermosetting one-component epoxy resin composition contains accelerators for epoxy resins other than the before mentioned at least one accelerator **C** in an amount of less than 0.5 % by weight, less than 0.1 % by weight, less than 0.05 % by weight, especially less than 0.01 % by weight, preferably less than 0.001 % by weight, based on the total weight of the epoxy resin composition. More preferably, the thermosetting one-component epoxy resin composition does not include any accelerators for epoxy resins other than the before mentioned at least one accelerator **C**.

The thermosetting one-component epoxy resin composition
at least one toughness improver **D** that is a terminally blocked polyurethane prepolymer of the formula (I): 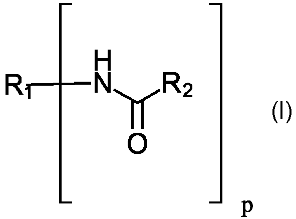
R₁ is a p-valent radical of a linear or branched polyurethane prepolymer terminated by isocyanate groups after the removal of the terminal isocyanate groups;
p has a value of 2 to 8; and
R₂ is a blocking group which is detached at a temperature above 100°C.
R₂ is not a substituent selected from the group consisting of cardanol after removal of the OH proton, 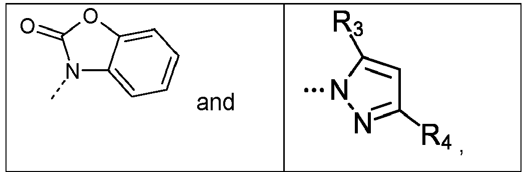
where R₃ and R₄ are each independently H or an alkyl group or an aryl group or an aralkyl group.

The dashed lines in the formulae in this document represent in each case the bond between the substituent in question and the associated molecule remainder.

It was surprisingly found that when said components are used as a blocking agent for a polyurethane prepolymer of the formula (I) that is used in a thermosetting one-component epoxy resin containing a curing agent **B** that is a dihydrazide, the storage stability of the thermosetting one-component epoxy resin was insufficient.

This can be seen, for example, in table 2 in the comparison of Ref1-Ref3 with E1 - E8. Surprisingly, the storage stability is not insufficient in case dicyandiamide is used as a curing system. This can be seen, for example, in table 4 in the comparison of Ref5 with Ref6 and Ref7.

R₂ is not a substituent that is cardanol after removal of the OH proton. The term "cardanol" in this document is to be understood as compounds that are decarboxylated derivatives of anacardic acids, which are formed during thermal treatment from the shells of cashew nuts (Anacardium occidentale). The unsaturated aliphatic substituents of cardanol have the general formula C₁₅H₃₁₋₂ₓ where x is the number of double bonds in the alkyl substituent.

The mono-unsaturated cardanol, phenol, 3-(8-pentadecenyl)-, (Z)-, has the CAS number: 501-26-8. The double-unsaturated cardanol, phenol, 3-(8,11-pentadecadienyl)-, (Z,Z)-, has the CAS number: 51546-63-5. The triple-unsaturated cardanol, phenol, 3-(8Z,11Z)-8,11,14-pentadecatrienyl-, has the CAS number: 79353-39-2. A mixture of said mono-, double- and triple-unsaturated cardanols is commercially available for example as Cardolite NC 700 from Cardolite.

R₂ is not a substituent that is 2-benzoxazolinone after removal of the NH proton, CAS-number:59-49-4.

R₂ is not a substituent of the formula 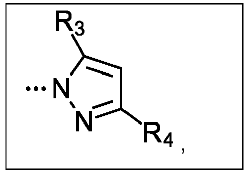 where R₃ and R₄ are each independently H or an alkyl group or an aryl group or an aralkyl group. Preferably, if R₃ or R₄ is an alkyl group, it is more particularly a linear or branched C₁-C₂₀ alkyl group, if R₃ or R₄ is an aralkyl group, said group is more particularly a methylene-bonded aromatic group, more particularly a benzyl group. More preferably, R₃ and R₄ are a linear or branched C₁-C₂₀ alkyl group, most preferably methyl (3,5-dimethylpyrazole after the removal of the NH-proton).

R₂ is a blocking group which is detached at a temperature above 100°C.

Preferably, R₂ is independently a substituent selected from the group consisting of

---O-R₅

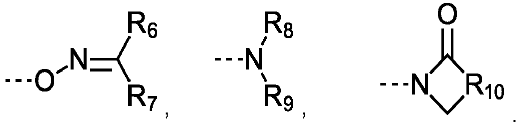

R₅ is an aralkyl group or is a mono- or polycyclic, substituted or unsubstituted aromatic group optionally having aromatic hydroxyl groups. Preferred as R₅ are, in particular, phenols or bisphenols following removal of a hydroxyl group. Preferred examples of such phenols and bisphenols are selected from the group consisting of phenol, cresol, resorcinol, pyrocatechol, phenols reacted with styrene or with dicyclopentadiene, bisphenol A, bisphenol F, 2,2'-diallylbisphenol A, 4-methoxyphenol (HQMME) and 4-cumylphenol, preferably selected from phenol, 4-methoxyphenol (HQMME) and 4-cumylphenol.

Also considered as R₅ are, in particular, hydroxybenzyl alcohol and benzyl alcohol following removal of a hydroxyl group, preferably benzyl alcohol following removal of a hydroxyl group.

R₆ and R₇ are each independently an alkyl or cycloalkyl or aralkyl or arylalkyl group, or R₆ together with R₇ form part of a 4- to 7-membered, optionally substituted ring.

If R₆ or R₇ is an alkyl group, it is more particularly a linear or branched C₁-C₂₀ alkyl group. If R₆ or R₇ is an aralkyl group, said group is more particularly a methylene-bonded aromatic group, more particularly a benzyl group. If R₆ or R₇ is an alkylaryl group, then it is more particularly a phenylene-attached C₁ to C₂₀ alkyl group, such as tolyl or xylyl.

Preferably, R₆ or R₇ is an alkyl group, more preferably a linear or branched C₁-C₂₀ alkyl group, even more preferably a methyl or ethyl group. Most preferably the substituent is 2-butanone oxime (MEKO) after the removal of the OH proton.

R₈ is H or an alkyl group and R₉ is an alkyl group. Preferably, R₈ is H or a linear or branched C₁-C₂₀ alkyl group, most preferably a linear C₁-C₁₀ alkyl group. Preferably, R₉ is a linear or branched C₁-C₂₀ alkyl group, most preferably a linear C₁-C₁₀ alkyl group. Most preferably it is a substituent selected from the group consisting of octylamine or dibutylamine, both after the removal of a NH proton.

R₁₀ is an alkylene group which has 2 to 5 carbon atoms and optionally has double bonds or is substituted, or is a phenylene group or a hydrogenated phenylene group, especially ε-caprolactam after removal of the NH proton. Preferably R₁₀ is ε-caprolactam after removal of the NH proton.

More preferably, R₂ is independently a substituent selected from the group consisting of

---O-R₅

and 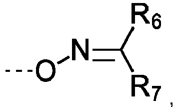 more preferably

---O-R₅

Most preferably, R₂ is selected from the group consisting of 2-butanone oxime (MEKO), phenol, 4-methoxyphenol (HQMME) and 4-cumylphenol, all after the removal of the OH proton.

A selection from 2-butanone oxime (MEKO), phenol and 4-cumylphenol is advantageous with respect to high impact peel values, especially if a mixture of curing agent B1 and B2 is used. This can be seen, for example, in the comparison of E12-E14 with E11 and E16-E18 with E15 in table 6.

The selection of 2-butanone oxime (MEKO) is advantageous with respect to highest impact peel values, especially if a mixture of curing agent B1 and B2 is used. This can be seen, for example, in the comparison of E13 with E11/12/14 and E17 with E15/16/18 in table 6.

A selection from 4-methoxyphenol (HQMME) and 4-cumylphenol, especially 4-methoxyphenol (HQMME), is advantageous with respect to high storage stability, especially if a mixture of curing agent B1 and B2 is used. This can be seen, for example, in the comparison of E11/14 with E12/13 and E15/18 with E16/17 in table 6.

The terminally blocked polyurethane prepolymer is prepared from a linear or branched polyurethane prepolymer terminated by isocyanate groups with one or more isocyanate-reactive compounds. If two or more such isocyanate-reactive compounds are used, the reaction can be effected sequentially or with a mixture of these compounds.

The reaction is preferably effected in such a way that the one or more isocyanate-reactive compounds are used stoichiometrically or in a stoichiometric excess in order to ensure that all NCO groups have been converted.

The polyurethane prepolymer with isocyanate end groups can be prepared from at least one diisocyanate or triisocyanate and from a polymer **Q_{PM}** having terminal amino, thiol or hydroxyl groups and/or from an optionally substituted polyphenol **Q_{PP}**.

Suitable diisocyanates are aliphatic, cycloaliphatic, aromatic or araliphatic diisocyanates, especially commercial products such as methylene diphenyl diisocyanate (MDI), hexamethylene diisocyanate (HDI), toluene diisocyanate (TDI), toluidine diisocyanate (TODI), isophorone diisocyanate (IPDI), trimethylhexamethylene diisocyanate (TMDI), 2,5- or 2,6-bis(isocyanatomethyl)bicyclo[2.2.1]heptane, naphthalene 1,5-diisocyanate (NDI), dicyclohexylmethyl diisocyanate (H₁₂MDI), p-phenylene diisocyanate (PPDI), m-tetramethylxylylene diisocyanate (TMXDI), etc. and dimers thereof. Preference is given to HDI, IPDI, MDI or TDI.

Suitable triisocyanates are trimers or biurets of aliphatic, cycloaliphatic, aromatic or araliphatic diisocyanates, especially the isocyanurates and biurets of the diisocyanates described in the previous paragraph. It is of course also possible to use suitable mixtures of di- or triisocyanates.

Especially suitable polymers **Q_{PM}** having terminal amino, thiol or hydroxyl groups are polymers **Q_{PM}** having two or three terminal amino, thiol or hydroxyl groups.

The polymers **Q_{PM}** advantageously have an equivalent weight of 300-6000, especially of 600-4000, preferably of 700-2200, g/equivalent of NCO-reactive groups.

Preferred polymers **Q_{PM}** are polyols having average molecular weights between 600 and 6000 daltons, selected from the group consisting of polyethylene glycols, polypropylene glycols, polyethylene glycol-polypropylene glycol block polymers, polybutylene glycols, hydroxyl-terminated polybutadienes, hydroxyl-terminated butadiene-acrylonitrile copolymers and mixtures thereof, preferably polybutylene glycols and hydroxyl-terminated polybutadienes.

Especially preferred polymers **Q_{PM}** are α-ω-dihydroxy polyalkylene glycols having C₂-C₆-alkylene groups or having mixed C₂-C₆-alkylene groups, terminated by amino, thiol or, preferably, hydroxyl groups. Particular preference is given to the list consisting of polypropylene glycols, polybutylene glycols and poly(tetramethylene glycol), especially poly(tetramethylene glycol).

Further particular preference is further given to hydroxy-terminated polybutadiene.

Especially suitable polyphenols **Q_{PP}** are bis-, tris- and tetraphenols. This is understood to mean not just straight phenols but optionally also substituted phenols. The nature of the substitution may be very varied. More particularly, this is understood to mean substitution directly on the aromatic ring to which the phenolic OH group is bonded. Phenols are additionally understood to mean not just monocyclic aromatics but also polycyclic or fused aromatics or heteroaromatics that have the phenolic OH group directly on the aromatic or heteroaromatic system.

In a preferred embodiment, the polyurethane prepolymer is prepared from at least one diisocyanate or triisocyanate and from a polymer **Q_{PM}** having terminal amino, thiol or hydroxyl groups. The polyurethane prepolymer is prepared in a manner known to the person skilled in the art of polyurethane, especially by using the diisocyanate or triisocyanate in a stoichiometric excess in relation to the amino, thiol or hydroxyl groups of the polymer **Q_{PM}**.

The polyurethane prepolymer having isocyanate end groups preferably has elastic character. It preferably exhibits a glass transition temperature Tg of less than 0°C.

Especially preferred polyurethane prepolymers with isocyanate end groups are prepared from at least one diisocyanate or triisocyanate, preferably HDI, IPDI, MDI or TDI, most preferably IPDI, and from a polymer **Q_{PM}**, preferably selected from the group consisting of poly(tetramethylene glycol) and hydroxy-terminated polybutadiene, especially a mixture thereof.

Preferably, the amount of the at least one toughness improver **D** that is a terminally blocked polyurethane prepolymer of the formula (I) is from 10 - 50 wt.-%, preferably 15 - 35 wt.-%, based on the total weight of the thermosetting one-component epoxy resin composition.

Preferably, the weight ratio of the at least one epoxy resin **A** to the at least one toughness improver **D (A/D)** is from 1.0 - 4.0.

In case the weight ratio of the at least one epoxy resin **A** to the at least one toughness improver **D (A/D)** is from 1.0 - 2.0, preferably 1.2 - 1.7, more preferably 1.3 - 1.5, the advantageous effect of reduced viscosity increases during storage by selecting the right blocking group is most effective.

In case the weight ratio of the at least one epoxy resin **A** to the at least one toughness improver **D (A/D)** is from 2.0 - 4.0, preferably 2.1 - 3.0, more preferably 2.5 - 2.8, low values for viscosity increase during storage are obtained.

Said effects of said preferred weight ratios **(A/D)** can be seen, for example, in table 8 in the comparison of E19 - E22.

In a further preferred if the thermosetting one-component epoxy resin composition additionally comprises at least one filler **F**. Preference is given here to mica, talc, kaolin, wollastonite, feldspar, titanium oxide, syenite, chlorite, bentonite, montmorillonite, calcium carbonate (precipitated or ground), dolomite, quartz, silicas (fused or precipitated), cristobalite, calcium oxide, aluminum hydroxide, magnesium oxide, hollow ceramic beads, hollow glass beads, hollow organic beads, glass beads, color pigments. Particular preference is given to fillers selected from the group consisting of calcium carbonate, calcium oxide, talc, titanium oxide, and fumed silicas.

Advantageously, the total proportion of the overall filler **F** is 10-50% by weight preferably 10-40% by weight, more preferably 10-30% by weight, based on the total weight of the thermosetting one-component epoxy resin composition.

In a further preferred embodiment, the composition additionally comprises at least one epoxy-bearing reactive diluent **G**. Such reactive diluents are known to the person skilled in the art. Preferred examples of epoxy-bearing reactive diluents are:
- glycidyl ethers of monofunctional, saturated or unsaturated, branched or unbranched, cyclic or open-chain, C₄-C₃₀ alcohols, e.g. butanol glycidyl ether, hexanol glycidyl ether, 2-ethylhexanol glycidyl ether, allyl glycidyl ether, tetrahydrofurfuryl and furfuryl glycidyl ether, trimethoxysilyl glycidyl ether, and the like;
- glycidyl ethers of difunctional, saturated or unsaturated, branched or unbranched, cyclic or open-chain, C₂-C₃₀ alcohols, e.g. ethylene glycol glycidyl ether, butanediol glycidyl ether, hexanediol glycidyl ether, octanediol glycidyl ether, cyclohexanedimethanol diglycidyl ether, neopentyl glycol diglycidyl ether, and the like;
- glycidyl ethers of tri- or polyfunctional, saturated or unsaturated, branched or unbranched, cyclic or open-chain, alcohols, such as epoxidized castor oil, epoxidized trimethylolpropane, epoxidized pentaerythritol or polyglycidyl ethers of aliphatic polyols, such as sorbitol, glycerol, trimethylolpropane, and the like;
- glycidyl ethers of phenol compounds and aniline compounds, such as phenyl glycidyl ether, cresyl glycidyl ether, p-tert-butylphenyl glycidyl ether, nonylphenol glycidyl ether, 3-n-pentadecenyl glycidyl ether (from cashewnutshell oil), N,N-diglycidylaniline, and the like;
- epoxidized amines, such as N,N-diglycidylcyclohexylamine, and the like;
- epoxidized mono- or dicarboxylic acids, such as glycidyl neodecanoate, glycidyl methacrylate, glycidyl benzoate, diglycidyl phthalate, tetrahydrophthalate and hexahydrophthalate, diglycidyl esters of dimeric fatty acids, and the like;
- epoxidized di- or trifunctional, low to high molecular weight polyether polyols, such as polyethylene glycol diglycidyl ether, polypropylene glycol diglycidyl ether, and the like.

Particular preference is given to hexanediol diglycidyl ether, cresyl glycidyl ether, p-*tert*-butylphenyl glycidyl ether, polypropylene glycol diglycidyl ether and polyethylene glycol diglycidyl ether.

Advantageously, the total proportion of the epoxy-bearing reactive diluent **G** is 0.1-15% by weight, preferably 0.1-5% by weight, especially preferably 0.1-2% by weight, more preferably 0.2-1% by weight, based on the total weight of the thermosetting one-component epoxy resin composition.

The composition may include further constituents, especially catalysts, stabilizers, especially heat and/or light stabilizers, thixotropic agents, plasticizers, solvents, mineral or organic fillers, blowing agents, dyes and pigments, anticorrosives, surfactants, defoamers and adhesion promoters.

Suitable plasticizers are especially phenol alkylsulfonates or N-butylbenzamide, as commercially available as Mesamoll^{®} or Dellatol BBS from Bayer.

Suitable stabilizers are especially optionally substituted phenols such as BHT or Wingstay^{®} T (Elkem), sterically hindered amines or N-oxyl compounds such as TEMPO (Evonik).

It is advantageous when the epoxy resin composition of the invention has a viscosity at 25°C of 500-4500 Pa*s, especially 600-2000 Pa*s, preferably 600-1200 Pa*s, especially measured with a rheometer in oscillation using a plate-plate geometry with the following parameters: 5 Hz, measurement gap 1 mm, plate-plate diameter 25 mm, 1% deformation. This is advantageous in that this assures good applicability.

It has been found that the thermosetting one-component epoxy resin compositions described are particularly suitable for use as one-component thermosetting adhesives, especially as a thermosetting one-component bodywork adhesive in motor vehicle construction. Such a one-component adhesive has a range of possible uses. Such adhesives are required for the bonding of heat-stable materials. Heat-stable materials are understood to mean materials which are dimensionally stable at a curing temperature of 100 - 220°C, preferably 120 - 200°C, at least during the curing time. In particular, these are metals and plastics, such as ABS, polyamide, polyphenylene ether, composite materials, such as SMC, unsaturated polyesters GFP, epoxy or acrylate composite materials. Preference is given to the use in which at least one material is a metal. A particularly preferred use is considered to be the bonding of identical or different metals, especially in bodywork construction in the automobile industry. The preferred metals are in particular steel, especially electrolytically galvanized, hot-dip-galvanized or oiled steel, Bonazinc-coated steel, and post-phosphated steel, and also aluminum, especially in the variants which typically occur in automobile construction.

A further aspect of the present invention relates to a process for the bonding of heat-stable substrates, which comprises the stages:
i) applying a thermosetting one-component epoxy resin composition as described in detail above to the surface of a heat-stable substrate **S1**, especially of a metal;
ii) contacting the thermosetting one-component epoxy resin composition applied with the surface of a further heat-stable substrate **S2**, especially of a metal;
iii) heating the composition to a temperature of 100-220°C, especially of 120-200°C, preferably between 130 and 150°C, more preferably between 130 and 140°C.

The substrate **S2** consists here of the same material as or a different material from the substrate **S1**. The substrates **S1** and/or **S2** are in particular the aforementioned metals and plastics.

Preferably, in step iii), the composition is heated to a temperature of 100-220°C, especially of 120-200°C, preferably between 130 and 150°C, more preferably between 130 and 140°C, and the composition is left at the aforementioned temperature for 10 min - 6 h, 10 min - 2 h, 10 min - 60 min, 10 min - 30 min, 10 min - 20 min, more preferably 10 min - 15 min.

Such a method of bonding heat-stable materials results in an adhesive-bonded article. Such an article is preferably a vehicle or part of a vehicle.

A further aspect of the present invention accordingly relates to an adhesive-bonded article obtained from the abovementioned process. Furthermore, the compositions according to the invention are suitable not only for automobile construction but also for other fields of use. Particular mention should be made of related applications in the construction of transportation means, such as ships, trucks, buses or rail vehicles, or in the construction of consumer goods, such as, for example, washing machines.

The materials adhesive-bonded by means of a composition according to the invention are used at temperatures between typically 120°C and -40°C, preferably between 100°C and -40°C, in particular between 80°C and -40°C.

A particularly preferred use of the thermosetting one-component epoxy resin composition of the invention is the use thereof as a thermosetting one-component bodywork adhesive in motor vehicle construction or as a stiffening compound or as a foamable, thermosetting composition for the reinforcement of voids in structural components and reinforcing elements.

A further aspect of the present invention relates to a cured epoxy resin composition as obtained by heating a thermosetting one-component epoxy resin composition as described in detail above.

More preferably, the compositions of the invention have the following properties:
- TS, measured as described in the experimental section, of > 20 MPa, especially ≥ 25 MPa;
- EB, measured as described in the experimental section, of 1 - 10 % especially 3 - 8 %;
- Mod, measured as described in the experimental section, of 1000 - 6000 MPa, especially 1200 - 5000 MPa;
- LSS, measured as described in the experimental, of > 25 MPa, especially ≥ 28 MPa, especially ≥ 30 MPa;
- IP 150°C, measured as described in the experimental, of ≥ 15 N/mm, especially ≥ 20 N/mm.

It is further preferred that the compositions of the invention have an viscosity increase in percent, measured as described in the experimental section, for "Visco 50 1W 50" of less than 100 %, preferably less than 50 %, more preferably less than 30 %.

### Examples

Some examples which further illustrate the invention, but which are not intended to restrict the scope of the invention in any way, are cited below.

### Preparation of the toughness improver ("D1-D11")

150 g of poly-THF 2000 (OH number 57 mg/g KOH) and 150 of PolyBD R45V (OH number 46 mg/g KOH) were dried under vacuum at 105°C for 30 minutes. Once the temperature had been reduced to 90°C, 61.5 g of IPDI and 0.14 g of dibutyltin dilaurate were added. The reaction was carried out under vacuum at 90°C until the NCO content was constant at 3.10% after 2.0 h (calculated NCO content: 3.15%). Subsequently, the in the raw material list below indicated blocking agent (1.2 times excess of blocking agent to the measured NCO content except D3, D8 and D9 using 1.0 ratio) was added and stirring was continued at 105°C under vacuum until it was no longer possible to detect any free NCO. The product was used as such as toughness improver **D1 - D11**.

| | |
|---|---|
| A | Liquid aromatic epoxy resin, D.E.R. 331 (bisphenol A diglycidyl ether), DOW |
| E | Tert-Butylphenyl-glycidylether, Polypox R7, reactive diluent |
| B1 | Isophthalic dihydrazide (IDH), CAS: 2760-98-7, Mw: 194.194 g/mol |
| B2 | Adipic dihydrazide (ADH), CAS: 1071-93-8, Otsuka ADH/S (median particle size D50 of 4-15 µm), Otsuka Chemical Co., Mw: 174.20 g/mol |
| DICY | Dicyandiamide, Alzchem |
| C1 | N,N-dimethylurea, Mw: 88.11 g/mol, Sigma Aldrich |
| F1 | Calcium carbonate |
| F2 | Pyrogenic silica |
| F3 | Calcium oxide |
| | Poly-THF 2000 (difunctional polybutylene glycol) (OH equivalent weight = about 1000 g/OH equivalent), BASF |
| | PolyBD R45V (hydroxyl-terminated polybutadiene) (OH equivalent weight = about 1230 g/OH equivalent), Cray Valley |
| | Isophorone diisocyanate (= "*IPDI*"), Evonik |

| Toughness improver **D:** | **Blocking agent used:** |
|---|---|
| D1 | Cardolite NC-700 (cardanol, meta-substituted alkenylmonophenol), Cardolite |
| D2 | 2- Benzoxazolinone, Sigma-Aldrich |
| D3 | 3,5-Dimethylpyrazole, Sigma-Aldrich |
| D4 | 4-Methoxyphenol (HQMME), Solvay |
| D5 | Phenol, Sigma-Aldrich |
| D6 | Benzylalcohol, Sigma-Aldrich |
| D7 | MEKO, Sigma-Aldrich |
| D8 | Octylamine, Sigma-Aldrich |
| D9 | Dibutylamine, Sigma-Aldrich |
| D10 | Caprolactam, Sigma-Aldrich |
| D11 | 4-cumylphenol, Alfa-Aesar |

| | |
|---|---|
| Raw materials used. | |

### Production of the compositions

The reference compositions Ref1-Ref7 and the inventive compositions E1 to E22 were produced according to the compositions in table 1, 3, 5 and 7, wherein the stated amounts are in parts by weight. The ratio of the proportion of the sum of the epoxy groups of the epoxy resin **A** in mol / proportion of curing agent **B** in mol **(A/B)** is 4. In case dicyandiamide was used, the ratio was 5.5. The ratio of the proportion of accelerator **C** in grams per mole of the sum of the epoxy groups of the epoxy resin **A (A/C)** is 0.1.

### Test methods:

### Tensile Strength (TS), Elongation at Break (EB) and Modulus of elasticity (Mod) (DIN EN ISO 527)

These mechanical properties were determined by using dumbbell-shaped bars (specimen type 5A of DIN EN ISO 527) having a thickness of 2 mm and a length of 750 mm. After curing at 180 °C for 30 minutes, the test specimens were measured under standard conditions at a pulling speed 2 mm/min (TS, EB, Mod), respectively. The tensile strength, elongation at break and modulus of elasticity were determined according to DIN EN ISO 527. Thereby the modulus of elasticity (E-Modulus was determined in the elongation range of 0.05%-0.25%.

### Lap shear strength (LSS) (DIN EN 1465)

Cleaned test specimens of Elo H420 steel (thickness 1.5 mm) that had been reoiled with Anticorit PL 3802-39S were bonded with the adhesive over a bonding area of 25 × 10 mm with glass beads as spacer in a layer thickness of 0.3 mm, and cured at oven temperature 180°C for 30 min object temperature. Lap shear strength was determined on a tensile tester at a strain rate of 10 mm/min in a triple determination to DIN EN 1465.

### impact peel strength (IP) (to ISO 11343)

The specimens were produced with the adhesive and DC04+ZE steel with dimensions of 90 × 20 × 0.8 mm. The bonding area here was 20 × 30 mm at a layer thickness of 0.3 mm with glass beads as spacer. The samples were cured under the following conditions:
"IP 140°C": 140°C for 15 min object temperature
"IP 150°C": 150°C for 30 min object temperature
"IP 180°C": 180°C for 30 min object temperature
"IP 200°C": 200°C for 30 min object temperature

The added term "RT" in the tables 2-8 after IP means impact-peel was measured at 23°C. The added term "-30" in the tables 2-8 after IP means impact-peel was measured at -30°C. Impact peel strength was measured at 23°C as a triple determination on a Zwick 450 impact pendulum. The impact peel strength reported is the average force in N/mm under the measurement curve from 25% to 90% to ISO11343.

### Tg

The Tg value (glass transition temperature) were determined with a Dynamic Mechanical Thermal Analyzer (DMTA) of Netzsch Gabo with cured adhesive samples of the dimensions 4 × 25 × 2 mm³ (not including the holding area) stamped out of at 180°C cured adhesives sheets of 2 mm thickness. Samples were subjected to tensional vibration in the temperature range from -40°C to 200°C with a heating rate of 1K/min at a frequency of 1 Hz, at a static deformation of 0.3% and a dynamic deformation of 0.05%

### Viscosity/storage stability of compositions

Viscosity measurements of the compositions were effected 1 d after production on an Anton Paar MCR 101 rheometer by oscillation using a plate-plate geometry at a temperature of 25°C or 50°C with the following parameters: 10 Hz, measurement gap 1 mm, plate-plate diameter 25 mm, 0.01-10% deformation, determination of A4 complex viscosity h* determined at 10% deformation. The measurement is displayed in table 1, 3, 5 and table 7 under "Visco 25", "Visco 50" respectively.

For assessment of the storage stability of the adhesives, the viscosity measurement was repeated after storage at the specified temperature for a specified time in weeks (W) or month (M), and the percentage rise in viscosity that results after the storage was ascertained. The measured viscosity in Pa*s measured at a temperature of 25°C or 50°C after storage for 1 week at 50°C is displayed as "Visco 25 1W 50°C", "Visco 50 1W 50°C" respectively. The measured viscosity in Pa*s measured at a temperature of 50°C after storage for 13 month at 23°C is displayed as "Visco 50 13M 23°C". The value between parentheses shows the percentage rise in viscosity.

**Table 1, n.d. = not determined**

| | **Ref1** | **Ref2** | **Ref3** | **E1** | **E2** | **E3** | **E4** | **E5** | **E6** | **E7** | **E8** |
|---|---|---|---|---|---|---|---|---|---|---|---|
| A | 42.35 | 42.35 | 42.35 | 42.35 | 42.35 | 42.35 | 42.35 | 42.35 | 42.35 | 42.35 | 42.35 |
| E | 1 | 1 | 1 | 1 | 1 | 1 | 1 | 1 | 1 | 1 | 1 |
| D1 | 20 | | | | | | | | | | |
| D2 | | 20 | | | | | | | | | |
| D3 | | | 20 | | | | | | | | |
| D4 | | | | 20 | | | | | | | |
| D5 | | | | | 20 | | | | | | |
| D6 | | | | | | 20 | | | | | |
| D7 | | | | | | | 20 | | | | |
| D8 | | | | | | | | 20 | | | |
| D9 | | | | | | | | | 20 | | |
| D10 | | | | | | | | | | 20 | |
| D11 | | | | | | | | | | | 20 |
| B2 | 10.15 | 10.15 | 10.15 | 10.15 | 10.15 | 10.15 | 10.15 | 10.15 | 10.15 | 10.15 | 10.15 |
| C | 0.02 | 0.02 | 0.02 | 0.02 | 0.02 | 0.02 | 0.02 | 0.02 | 0.02 | 0.02 | 0.02 |
| F1 | 16.48 | 16.48 | 16.48 | 16.48 | 16.48 | 16.48 | 16.48 | 16.48 | 16.48 | 16.48 | 16.48 |
| F2 | 5 | 5 | 5 | 5 | 5 | 5 | 5 | 5 | 5 | 5 | 5 |
| F3 | 5 | 5 | 5 | 5 | 5 | 5 | 5 | 5 | 5 | 5 | 5 |
| **Total (wt.-%):** | 100 | 100 | 100 | 100 | 100 | 100 | 100 | 100 | 100 | 100 | 100 |

**Table 2, n.d. = not determined, n.m. = not measurable since rubber-like consistency**

| | **Ref1** | **Ref2** | **Ref3** | **E1** | **E2** | **E3** | **E4** | **E5** | **E6** | **E7** | **E8** |
|---|---|---|---|---|---|---|---|---|---|---|---|
| **TS [MPa]** | 29.3 | 36.8 | 23.9 | 27.7 | 29.3 | 5.3 | 29.1 | 23.1 | 27.1 | 27.3 | 26.2 |
| **EB [%]** | 5.1 | 6.1 | 4.1 | 4.0 | 7.1 | 1.1 | 6.6 | 3.3 | 6.3 | 5.1 | 6.4 |
| **E-Modulus [MPa]** | 1510 | 1850 | 1340 | 1450 | 1410 | 700 | 1500 | 1340 | 1260 | 1480 | 1290 |
| **IP RT, 150°C [N/mm]** | 24.8 | 23.5 | 20.2 | 28.8 | 28.3 | n.d. | 34.2 | n.d. | 26.1 | n.d. | 29.3 |
| **IP RT, 180°C [N/mm]** | 24.7 | 21.6 | 21.3 | 24.1 | 26.5 | 0.4 | 29.8 | 4.7 | 23.0 | 15.9 | 27.8 |
| **IP RT, 200°C [N/mm]** | 26.3 | n.d. | 19.4 | 21.7 | 22.7 | n.d. | 21.4 | n.d. | 18.9 | n.d. | 26.1 |
| **I-Peel -30°C, 180°C [N/mm]** | 16.9 | n.d. | 13.7 | 16.1 | 35.1 | n.d. | 22.2 | n.d. | 17.6 | n.d. | 20.4 |
| **LSS [MPa]** | 33.9 | 32.9 | 29.1 | 34.3 | 881 | 8.6 | 35.6 | 18.0 | 33.4 | 26.3 | 35.6 |
| **Visco 25 [Pa*s]** | 374 | n.d. | 765 | 939 | 239 | 614 | 733 | 1240 | 755 | 851 | 1150 |
| **Visco 50 [Pa*s]** | 77 | n.d. | 208 | 272 | 1090 | 199 | 209 | 204 | 198 | 251 | 279 |
| **Visco 25 1W 50 °C [Pa*s]** | 601 (+61%) | n.m. | n.m. | 1110 (+18%) | 248 (+4%) | 680 (+11%) | 946 (+29%) | 1490 (+20%) | 836 (+11%) | 869 (+2%) | 1310 (+14%) |
| **Visco 50 1W 50°C [Pa*s]** | 111 (+44%) | n.m. | n.m. | 285 (+5%) | 28.3 | 208 (+5%) | 252 (+21%) | 219 (+7%) | 211 (+7%) | 244 (-3%) | 308 (+10%) |

**Table 3, n.d. = not determined**

| | **Ref4** | **Ref5** | **E9** | **Ref6** | **E10** | **Ref7** |
|---|---|---|---|---|---|---|
| A | 42.35 | 42.35 | 42.35 | 42.35 | 42.35 | 42.35 |
| E | 1 | 1 | 1 | 1 | 1 | 1 |
| D4 | 20 | | 20 | | 20 | |
| D1 | | 20 | | 20 | | 20 |
| B1 | | | | | 8.41 | 8.41 |
| B2 | | | 10.15 | 10.15 | 2.51 | 2.51 |
| Dicy | 5.16 | 5.16 | | | | |
| C | 0.02 | 0.02 | 0.02 | 0.02 | 0.02 | 0.02 |
| F1 | 21.47 | 21.47 | 16.48 | 16.48 | 15.71 | 15.71 |
| F2 | 5 | 5 | 5 | 5 | 5 | 5 |
| F3 | 5 | 5 | 5 | 5 | 5 | 5 |
| **Total (wt.-%):** | 100 | 100 | 100 | 100 | 100 | 100 |

**Table 4, n.d. = not determined**

| | **Ref4** | **Ref5** | **E9** | **Ref6** | **E10** | **Ref7** |
|---|---|---|---|---|---|---|
| **TS [MPa]** | 26.9 | 26.2 | 27.7 | 29.3 | 28.6 | 26.0 |
| **EB [%]** | 12.4 | 7.8 | 4.0 | 5.1 | 4.8 | 2.8 |
| **E-Modulus [MPa]** | 1350 | 1470 | 1450 | 1510 | 1530 | 1560 |
| **Tg DMTA [°C]** | 125 | 113 | 139 | 132 | 168 | 152 |
| **IP RT, 150°C [N/mm]** | - | - | 25.7 | 24.3 | 14.6 | - |
| **IP RT, 180°C [N/mm]** | 2.7 | - | 28.8 | 24.8 | 17.6 | 4.9 |
| **IP RT, 200°C [N/mm]** | 38.0 | 35.8 | 24.1 | 24.7 | 14.7 | 15.3 |
| **I-Peel -30°C, 180°C [N/mm]** | 25.9 | 25.7 | 21.7 | 26.3 | 11.3 | 6.3 |
| **LSS [MPa]** | 884 | 354 | 939 | 374 | 822 | 319 |
| **Visco 25 [Pa*s]** | 251 | 72 | 272 | 77 | 204 | 50 |
| **Visco 50 [Pa*s]** | 895 (+1%) | 350 (-1%) | 1110 (+18%) | 601 (+61%) | 1050 (+28%) | 560 (+76%) |
| **Visco 25 1W 50 °C [Pa*s]** | 240 (-4%) | 75 (+4%) | 285 (+5%) | 111 (+44%) | 236 (+16%) | 70 (+40%) |

**Table 5, n.d. = not determined**

| | **E11** | **E12** | **E13** | **E14** | **E15** | **E16** | **E17** | **E18** |
|---|---|---|---|---|---|---|---|---|
| A | 42.35 | 42.35 | 42.35 | 42.35 | 42.35 | 42.35 | 42.35 | 42.35 |
| E | 1 | 1 | 1 | 1 | 1 | 1 | 1 | 1 |
| D4 | 20 | | | | 20 | | | |
| D5 | | 20 | | | | 20 | | |
| D7 | | | 20 | | | | 20 | |
| D11 | | | | 20 | | | | 20 |
| B1 | | | | | 8.41 | 8.41 | 8.41 | 8.41 |
| B2 | 10.15 | 10.15 | 10.15 | 10.15 | 2.51 | 2.51 | 2.51 | 2.51 |
| C | 0.02 | 0.02 | 0.02 | 0.02 | 0.02 | 0.02 | 0.02 | 0.02 |
| F1 | 16.48 | 16.48 | 16.48 | 16.48 | 15.71 | 15.71 | 15.71 | 15.71 |
| F2 | 5 | 5 | 5 | 5 | 5 | 5 | 5 | 5 |
| F3 | 5 | 5 | 5 | 5 | 5 | 5 | 5 | 5 |
| **Total (wt.-%):** | 100 | 100 | 100 | 100 | 100 | 100 | 100 | 100 |

**Table 6, n.d. = not determined**

| | **E11** | **E12** | **E13** | **E14** | **E15** | **E16** | **E17** | **E18** |
|---|---|---|---|---|---|---|---|---|
| **TS [MPa]** | 27.7 | 29.3 | 29.1 | 26.2 | 28.6 | 33.8 | 35.2 | 33.1 |
| **EB [%]** | 4.0 | 7.1 | 6.6 | 6.4 | 4.8 | 6.9 | 6.7 | 5.2 |
| **E-Modulus [MPa]** | 1450 | 1410 | 1500 | 1290 | 1530 | 1630 | 1810 | 1820 |
| **Tg DMTA [°C]** | 28.8 | 28.9 | 34.2 | 29.3 | 17.6 | 12.6 | 20.0 | |
| **IP RT, 150°C [N/mm]** | 24.1 | 28.3 | 29.8 | 27.8 | 14.7 | 17.7 | 23.6 | 14.3 |
| **IP RT, 180°C [N/mm]** | 21.7 | 26.5 | 21.4 | 26.1 | 11.3 | 15.4 | 26.2 | |
| **IP RT, 200°C [N/mm]** | 34.3 | 35.1 | 35.6 | 35.6 | 28.0 | 35.3 | 36.1 | 30.1 |
| **I-Peel -30°C, 180°C [N/mm]** | 939 | 881 | 733 | 1150 | 822 | 826 | 681 | 786 |
| **LSS [MPa]** | 272 | 239 | 209 | 279 | 204 | 196 | 169 | 177 |
| **Visco 25 [Pa*s]** | 1110 (+18%) | 1090 (+224%) | 946 (+29%) | 1310 (+14%) | 1050 (+28%) | | | 1230 (+56%) |
| **Visco 50 [Pa*s]** | 285 (+5%) | 248 (+4%) | 252 (+21%) | 308 (+10%) | 236 (+16%) | | | 230 (+30%) |

**Table 7, n.d. = not determined**

| | **E19** | **E20** | **E21** | **E22** |
|---|---|---|---|---|
| A | 42.35 | 42.35 | 42.35 | 42.35 |
| E | 1 | 1 | 1 | 1 |
| D4 | 15 | 20 | 25 | 30 |
| B2 | 10.15 | 10.15 | 10.15 | 10.15 |
| C | 0.02 | 0.02 | 0.02 | 0.02 |
| F1 | 21.48 | 16.48 | 11.48 | 6.48 |
| F2 | 5 | 5 | 5 | 5 |
| F3 | 5 | 5 | 5 | 5 |
| **Total (wt.-%):** | 100 | 100 | 100 | 100 |

**Table 8, n.d. = not determined**

| | **E19** | **E20** | **E21** | **E22** |
|---|---|---|---|---|
| **TS [MPa]** | 32.9 | 27.7 | 24 | 17.5 |
| **EB [%]** | 5.7 | 4.0 | 10.3 | 16.1 |
| **E-Modulus [MPa]** | 1910 | 1450 | 1100 | 636 |
| **Tg DMTA [°C]** | 18.1 | 25.7 | 35.2 | 39.1 |
| **IP RT, 150°C [N/mm]** | 20.1 | 28.8 | 36.1 | 40.3 |
| **IP RT, 180°C [N/mm]** | 18.9 | 24.1 | 31.0 | 33.1 |
| **IP RT, 200°C [N/mm]** | 14.5 | 21.7 | 27.0 | 31.5 |
| **I-Peel -30°C, 180°C [N/mm]** | 34.0 | 34.3 | 31.3 | 26.8 |
| **LSS [MPa]** | 822 | 939 | 1050 | 1040 |
| **Visco 25 [Pa*s]** | 222 | 272 | 238 | 215 |
| **Visco 50 [Pa*s]** | 201 (-9%) | 285 (+5%) | 283 (+19%) | 257 (+20%) |
| **Visco 25 1W 50 °C [Pa*s]** | 207 (-7%) | - | 287 (+21%) | 310 (+44%) |

## Claims

1. A thermosetting one-component epoxy resin composition comprising
a) at least one epoxy resin **A** having an average of more than one epoxy group per molecule;
b) at least one curing agent **B** for epoxy resins, where the curing agent **B** is a dihydrazide, preferably selected from the group consisting of aromatic dicarboxylic dihydrazide **B1** and aliphatic dicarboxylic dihydrazide **B2**; and
c) at least one toughness improver **D** that is a terminally blocked polyurethane prepolymer of the formula (I): 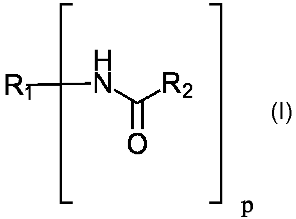
where R₁ is a p-valent radical of a linear or branched polyurethane prepolymer terminated by isocyanate groups after the removal of the terminal isocyanate groups;
p has a value of 2 to 8; and
R₂ is a blocking group which is detached at a temperature above 100°C, wherein R₂ is not a substituent selected from the group consisting of cardanol after removal of the OH proton, 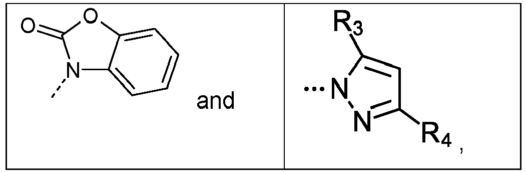 where
R₃ and R₄ are each independently H or an alkyl group or an aryl group or an aralkyl group.

2. The thermosetting one-component epoxy resin composition as claimed in claim 1, **characterized in that** R₂ is independently a substituent selected from the group consisting of
---O-R₅ 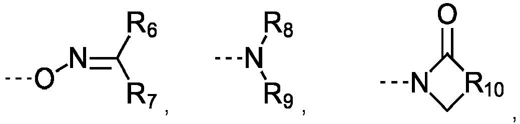 where
R₅ is an aralkyl group or is a mono- or polycyclic, substituted or unsubstituted aromatic group optionally having aromatic hydroxyl groups; R₆ and R₇ are each independently an alkyl or cycloalkyl or aralkyl or arylalkyl group,
or R₆ together with R₇ form part of a 4- to 7-membered, optionally substituted ring;
R₈ is H or an alkyl group and R₉ is an alkyl group; and
R₁₀ is an alkylene group which has 2 to 5 carbon atoms and optionally has double bonds or is substituted, or is a phenylene group or a hydrogenated phenylene group, especially ε-caprolactam after removal of the NH proton.

3. The thermosetting one-component epoxy resin composition as claimed in any of the preceding claims, **characterized in that** R₂ is independently a substituent selected from the group consisting of
---O-R₅ and 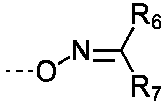
where R₅ are phenols or bisphenols following removal of a hydroxyl group, preferably phenols and bisphenols are selected from the group consisting of phenol, cresol, resorcinol, pyrocatechol, phenols reacted with styrene or with dicyclopentadiene, bisphenol A, bisphenol F, 2,2'-diallylbisphenol A, 4-methoxyphenol (HQMME) and 4-cumylphenol, preferably selected from phenol, 4-methoxyphenol (HQMME) and 4-cumylphenol; and
R₆ or R₇ is a linear or branched C₁-C₂₀ alkyl group, preferably 2-butanone oxime (MEKO) after the removal of the OH proton;
most preferred R₂ is selected from the group consisting of 2-butanone oxime (MEKO), phenol, 4-methoxyphenol (HQMME) and 4-cumylphenol, all after the removal of the OH proton.

4. The thermosetting one-component epoxy resin composition as claimed in claim 1 - 3, **characterized in that** the curing agent **B** is an aromatic dicarboxylic dihydrazide **B1**, preferably selected from the group consisting of isophthalic dihydrazide and/or terephthalic dihydrazide, preferably isophthalic dihydrazide.

5. The thermosetting one-component epoxy resin composition as claimed in claim 1 - 3, **characterized in that** the curing agent **B** is an aliphatic dicarboxylic dihydrazide **B2**, preferably selected from the group consisting of glutaric dihydrazide, adipic dihydrazide, pimelic dihydrazide, 8,12-eicosadienedioic acid 1,20-dihydrazide and 4-isopropyl-2,5-dioxoimidazolidine-1,3-di(propionohydrazide), especially adipic dihydrazide.

6. The thermosetting one-component epoxy resin composition as claimed in claim 1 - 3, **characterized in that** the curing agent **B** is a mixture of an aromatic dicarboxylic dihydrazide **B1** and an aliphatic dicarboxylic dihydrazide **B2**, wherein the aromatic dicarboxylic dihydrazide **B1** is isophthalic dihydrazide and an aliphatic dicarboxylic dihydrazide **B2** is adipic dihydrazide and the weight ratio of aromatic dicarboxylic dihydrazide **B1** to aliphatic dicarboxylic dihydrazide **B2 (B1/B2)** is from 1 - 6, preferably 2-5, more preferably 3 - 4.

7. The thermosetting one-component epoxy resin composition as claimed in any of the preceding claims, **characterized in that** the thermosetting one-component epoxy resin composition additionally includes at least one accelerator **C** selected from the list consisting of substituted ureas, imidazoles, imidazolines and blocked amines, especially substituted ureas.

8. The thermosetting one-component epoxy resin composition as claimed in claim 7, **characterized in that** the ratio of the proportion of accelerator **C** in grams per mole of the sum of the epoxy groups of the epoxy resin **A (C/A)** is preferably 0.01-0.5 g/mol of epoxy groups, especially 0.05-0.3 g/mol of epoxy groups, more preferably 0.075-0.2 g/mol of epoxy groups, most preferably 0.08-0.15 g/mol of epoxy groups.

9. The thermosetting one-component epoxy resin composition as claimed in any of the preceding claims, **characterized in that** the proportion of the epoxy resin **A** is 10-60% by weight, preferably 30-60% by weight, more preferably 40-55% by weight, based on the total weight of the one-component epoxy resin composition.

10. The thermosetting one-component epoxy resin composition as claimed in any of the preceding claims, **characterized in that** the ratio of the proportion of the sum of the epoxy groups of the epoxy resin **A** in mol / proportion of curing agent **B** in mol **(A/B)** is 2-6, preferably 3-5, most preferably 3.5-4.5.

11. The thermosetting one-component epoxy resin composition as claimed in any of the preceding claims, **characterized in that** the weight ratio of the at least one epoxy resin **A** to the at least one toughness improver **D (A/D)** is from 1.0 - 4.0, preferably from 1.0 - 2.0, more preferably 1.2 - 1.7, most preferably 1.3 - 1.5.

12. The thermosetting one-component epoxy resin composition as claimed in any of the preceding claims, **characterized in that** the thermosetting one-component epoxy resin composition additionally includes at least one filler **F**, preferably selected from the group consisting of calcium carbonate, calcium oxide, talc, titanium oxide, and fumed silicas; preferably the total proportion of the filler **F** is 10-50% by weight preferably 10-40% by weight, more preferably 10-30% by weight, based on the total weight of the thermosetting one-component epoxy resin composition.

13. The use of a thermosetting one-component epoxy resin composition as claimed in any of claims 1 to 12 as one-component thermosetting adhesive, especially as thermosetting one-component bodywork adhesive in motor vehicle construction.

14. A process for the adhesive bonding of heat-stable substrates, comprising the stages of:
i) applying a thermosetting one-component epoxy resin composition as claimed in any of claims 1 to 12 to the surface of a heat-stable substrate **S1**, especially of a metal;
ii) contacting the thermosetting one-component epoxy resin composition applied with the surface of a further heat-stable substrate **S2**, especially of a metal;
iii) heating the composition to a temperature of 100-220°C, especially of 120-200°C, preferably between 130 and 150°C, more preferably between 130 and 140°C;
in which the substrate **S2** consists of the same material as or a different material from the substrate **S1**.

15. The process as claimed in claim 14, wherein, in step iii) of heating the composition to a temperature of 100-220°C, especially of 120-200°C, preferably between 130 and 150°C, more preferably between 130 and 140°C, the composition is left at the aforementioned temperature for 10 min - 6 h, 10 min - 2 h, 10 min - 60 min, 10 min - 30 min, 10 min - 20 min, more preferably 10 min - 15 min.
